# FASCICULE DE BREVET EUROPEEN

(11) **EP 0 850 457 B1**
(45) Date de publication et mention de la délivrance du brevet: **29.12.2004**
(21) Numéro de dépôt: 96928505.5
(22) Date de dépôt: 12.08.1996
(51) Int. Cl.: G06K 7/08

(54) **DISPOSITIF DE LECTURE DE CHEQUES, ET NOTAMMENT DE LA PISTE PORTANT LE NUMERO D'IDENTIFICATION BANCAIRE**
EINRICHTUNG ZUM LESEN VON SCHECKS UND INSBESONDERE DER DIE BANKIDENTIFIKATIONSNUMMER ENTHALTENDEN SPUR
DEVICE FOR READING CHEQUES, PARTICULARLY THE TRACK COMPRISING THE ACCOUNT IDENTIFICATION NUMBER

(30) Priorité: 11.08.1995 FR 9509862
(43) Date de publication de la demande: 01.07.1998
(73) Titulaire: WYNID TECHNOLOGIES, 34830 Clapiers (FR)
(72) Inventeur: TRIAL, François, F-34130 Saint-Aunes (FR); WELMANT, Bernard, F-30110 Grand Combe (FR)
(74) Mandataire: Rhein, Alain
(86) Numéro de dépôt international: PCT/FR1996/001277
(87) Numéro de publication internationale: WO 1997/007477

(56) Documents cités:
- EP-A- 0 318 626
- DE-A- 2 659 640
- FR-A- 2 389 180

## Description

La présente invention a pour objet un dispositif de lecture de chèques et notamment de la piste portant le numéro d'identification bancaire.

On sait que les appareils de lecture et/ou d'écriture de moyens de paiement actuels réalisent généralement plusieurs fonctions et notamment la lecture des cartes à piste magnétique, la lecture et/ou l'écriture de cartes à microcircuit, la lecture et/ou l'écriture de chèques bancaires. Pour effectuer ces différentes opérations de lecture et/ou d'écriture ces appareils comportent, dans un boîtier, plusieurs dispositifs comprenant des moyens électroniques et mécaniques pour la lecture des cartes à pistes magnétiques et/ou des cartes à microcircuit, et des moyens optiques supplémentaires pour la lecture des chèques.

Toutefois ces appareils présentent une structure interne complexe et des coûts de fabrication relativement élevés dus notamment à l'intégration dans les boîtiers des dispositifs de lecture de chèques.

De plus dans certains commerces ou grandes surfaces la lecture des chèques est fréquemment perturbée par des interférences electromagnétiques avec divers appareils se trouvant à proximité, comme les caisses enregistreuses ou les systèmes de contrôle des produits, qui empêchent le bon fonctionnement des circuits électroniques.

En outre, il peut arriver que les utilisateurs introduisent par mégarde les cartes bancaires dans les fentes prévues pour la lecture des chèques, provoquant la destruction des têtes de lecture.

Un dispositif de lecture de chèques selon le préambule de la revendication 1 est décrit dans FR-A- 2 389 180. Le document EP-A- 0 318 626 décrit un dispositif similaire. DE-A- 26 59 640 décrit un lecteur pour des cartes à pistes magnétiques, dont la fente pour le passage de la carte est formée par deux pièces globalement parallélépipédiques.

La présente invention a pour objet un dispositif de lecture de chèques facilement logeable dans un boîtier et évitant les phénomènes de perturbations électromagnétiques dus à l'environnement.

Le dispositif de lecture de chèques selon l'invention comprend les caractéristiques selon la revendication 1.

Selon une caractéristique additionnelle du dispositif selon l'invention la pièce inférieure comporte une languette souple disposée le long de l'espace d'introduction des chèques en regard de la première tête de lecture, s'étendant de part et d'autre de celle-ci et destinée à plaquer lesdits chèques contre ladite première tête de lecture.

Selon un mode de réalisation particulier du dispositif selon l'invention le moyen de détection des perturbations électromagnétiques disposé dans la pièce supérieure est constitué d'une deuxième tête de lecture qui est avantageusement positionnée dans l'alignement de la première, sur le même axe transversal de la pièce supérieure.

Les avantages et les caractéristiques de la présente invention ressortiront plus clairement de la description qui suit et qui se rapporte au dessin annexé, lequel en représente un mode de réalisation non limitatif.

Dans le dessin annexé :
- la figure 1 représente une vue en perspective schématique, avec arraché partiel, du dispositif selon l'invention.
- la figure 2 représente une vue de face partielle de la languette de la pièce 2 inférieure.

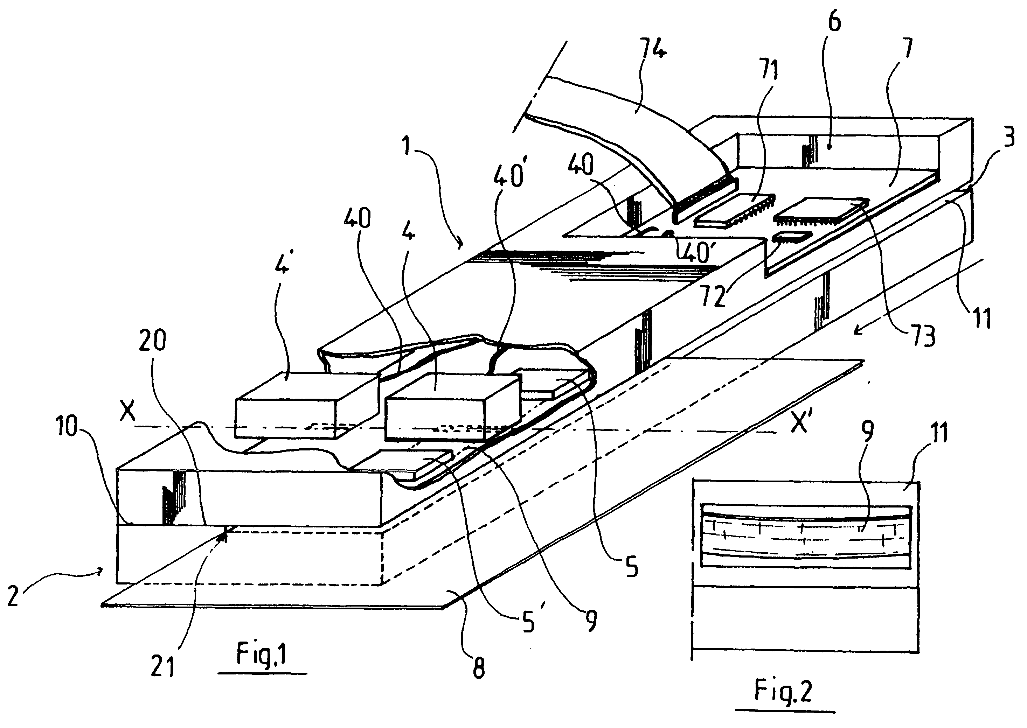

Si on se réfère à la figure 1 on peut voir que le dispositif de lecture de chèques selon l'invention est constitué de deux pièces 1 et 2 en matière plastique, ou autre matériau isolant, de forme parallélépipédique rectangle, solidarisées l'une à l'autre par exemple par thermosoudage partiel de leurs faces respectivement inférieure 10 et supérieure 20, la pièce inférieure 2 comportant un décrochement 21 créant une fente 3 entre les deux pièces pour le passage d'un chèque bancaire 8.

La fente 3 présente avantageusement une largeur de l'ordre de 1/6 mm interdisant le passage d'une carte bancaire.

La pièce supérieure 1 comporte intérieurement, ou noyée dans la masse, une première tête de lecture 4, située en regard de la fente 30 d'introduction d'un chèque bancaire 8, et notamment de la piste portant le numéro d'identification bancaire, encadrée par deux aimants 5 et 5' pour la magnétisation, en vue de leur lecture, des caractères de ladite piste d'identification. Une deuxième tête de lecture 4', disposée en alignement sur le même axe transversal XX' que la première tête de lecture 4, fait saillie hors de ladite pièce 1 de manière à capter un signal représentatif de l'environnement du lecteur de chèque, tandis qu'une carte électronique 7 est placée dans un logement 6 et reliée aux têtes de lecture 4 et 4' par des conducteurs électriques 40 et 40'.

La carte électronique 7 comporte différents moyens électroniques, à savoir un amplificateur 71 amplifiant le signal capté par l'une des deux têtes de lecture 4 et 4', un circuit de filtrage 72 et un circuit de conversion, non représenté, pour la conversion des signaux analogiques provenant des deux têtes de lectures 4 et 4' en signaux numériques qui peuvent être traités au moyen d'un algorithme intégrant une correction d'erreur. Un microprocesseur 73 permet de comparer le signal numérique relatif à la tête de lecture 4 avec le signal numérique relatif à la tête de lecture 4', qui varie en fonction des perturbations électromagnétiques environnantes.

La comparaison du signal provenant de la tête 4' en l'absence de perturbation avec un signal détectant une perturbation fournit une valeur de correction qui est ajoutée ou retranchée, au moyen du microprocesseur 73, au signal provenant de la tête de lecture 4 afin de restituer les caractères exacts imprimés sur la piste CMC7 du chèque.

Le code numérique correspondant, représentatif des caractères, est envoyé par l'intermédiaire d'une liaison électrique 74 vers une unité centrale d'acquisition et de traitement des données qui peut être un microcontrôleur signalant à un serveur monétique que le moyen de paiement par chèque est utilisé et transférant le signal représentatif de la piste CMC7 par l'intermédiaire d'une interface.

Si on se réfère à la figure 2 on peut voir que la face supérieure antérieure 11 de la pièce inférieure 2 comporte, en regard de la tête de lecture 4 et s'étendant de part et d'autre de celle-ci, une languette souple 9 permettant de plaquer le chèque et notamment la partie comportant la piste CMC7, en vue d'une meilleure lecture des caractères de ladite piste.

Le dispositif selon l'invention présente l'avantage de pouvoir être facilement mis en place dans un boîtier comportant un logement adapté, et de pouvoir être connecté à un microcontrôleur réalisant le traitement des signaux provenant d'autres dispositifs de lecture de moyens de paiement. Le microcontrôleur pourra alors recevoir les signaux traités par la carte électronique et les envoyer à un serveur monétique.

## Revendications

1. Dispositif de lecture de chèques et notamment de la piste portant le numéro d'identification bancaire, comportant une première tête de lecture (4) destinée à la lecture des chèques (8) et une deuxième tête de lecture (4') destinée à la détection des perturbations électromagnétiques environnantes et permettant de corriger le signal relatif à la première tête de lecture (4) afin de restituer sans erreur les caractères à lire sur le chèque, un aimant (5) étant encore situé à proximité de la première tête de lecture (4),
**caractérisé par le fait que** le dispositif comporte deux pièces globalement parallélépipédiques réalisées en un matériau isolant, superposées et solidarisées l'une à l'autre de manière à laisser subsister entre elles une fente longitudinale dont la largeur autorise le passage d'un chèque, la pièce supérieure (1) comprenant la première et la deuxième tête de lecture, les signaux provenant des deux têtes de lecture (4, 4') étant traités par une carte électronique (7) ménagée dans la pièce supérieure, et **par le fait que** la deuxième tête de lecture (4') fait saillie hors de la pièce supérieure (1) et est positionnée dans l'alignement de la première (4) sur le même axe transversal de la pièce supérieure (1).

2. Dispositif selon la revendication précédente, **caractérisé en ce qu'**il comporte deux aimants (5, 5') encadrant la première tête de lecture (4).

3. Dispositif de lecture selon l'une quelconque des revendications précédentes, **caractérisé en ce que** la largeur de la fente longitudinale (3) comporte une largeur définie pour le passage d'un chèque bancaire (8) tout en interdisant le passage d'une carte bancaire.

4. Dispositif selon l'une quelconque des revendications précédentes, **caractérisé en ce que** la deuxième pièce (2) comporte à sa face supérieure (11) une languette souple (9) disposée longitudinalement au regard de la première tête de lecture (4) et s'étendant de part et d'autre de celle-ci en vue de plaquer un chèque (8) contre ladite première tête de lecture (4).

## Claims

1. Device for reading cheques and, in particular, the track carrying the banking identification number, including a first reading head (4) for reading the cheques (8) and a second reading head (4') for detecting the surrounding electromagnetic disturbances and allowing to correct the signal related to the first reading head (4), in order to restore without errors the characters to be read on the cheque, a magnet (5) also being located in the vicinity of the reading head (4),
**characterised in that** the device includes two globally parallelepipedic parts made out of an insulating material, superimposed and made integral with each other, so as to leave between them a longitudinal slot the width of which authorises the passing through of a cheque, the upper part (1) comprising the first and the second reading heads, the signals proceeding from the two reading heads (4, 4') being processed by an electronic card (7) provided for in the upper part,
and **in that** the second reading head (4') protrudes out of the upper part (1) and is positioned in alignment with the first one (4) on the same transverse axis of the upper part (1).

2. Device according to the preceding claim, **characterised in that** it comprises two magnets (5, 5') surrounding the first reading head (4).

3. Reading device according to any of the preceding claims, **characterised in that** the width of the longitudinal slot (3) has a width defined for the passing through of a bank cheque (8), while impeding the passing through of a bank card.

4. Device according to any of the preceding claims, **characterised in that** the second part (2) includes at its upper face (11) a flexible tongue (9) arranged longitudinally in front of the first reading head (4) and extending on both sides of the latter, with a view to apply a cheque (8) against said first reading head (4).

## Patentansprüche

1. Vorrichtung zum Lesen von Schecks und insbesondere der Spur, die die Bankkennzahl beinhaltet, umfassend einen ersten Lesekopf (4), vorgesehen für das Lesen von Schecks (8), und einen zweiten Lesekopf (4'), vorgesehen für die Detektion der umliegenden elektromagnetischen Störungen und erlaubend, das Signal hinsichtlich des ersten Lesekopfs (4) zu korrigieren, um die auf dem Scheck zu lesenden Kennzeichen fehlerfrei wiederherzustellen, wobei noch ein Magnet (5) in der Nähe des ersten Lesekopfs (4) befindlich sei,
**dadurch gekennzeichnet, daß** die Vorrichtung zwei insgesamt quaderförmige, aus einem isolierenden Material hergestellte Teile umfaßt, die übereinander liegend und fest miteinander verbunden sind, derart, um dazwischen eine Längsspalte bestehen zu lassen, deren Breite den Durchgang eines Schecks erlaubt, wobei der obere Teil (1) den ersten und den zweiten Lesekopf umfaßt, wobei die aus den beiden Leseköpfen (4, 4') herstammenden Signale durch eine im oberen Teil angebrachte elektronische Karte (7) verarbeitet werden,
und **dadurch gekennzeichnet, daß** der zweite Lesekopf (4') außerhalb des oberen Teils (1) vorspringt und mit dem ersten Lesekopf (4) ausgerichtet auf derselben schrägen Achse des oberen Teils (1) angebracht ist.

2. Vorrichtung nach dem vorgehenden Anspruch, **dadurch gekennzeichnet, daß** sie zwei Magneten (5, 5') umfaßt, die den ersten Lesekopf (4) einrahmen.

3. Lesevorrichtung nach irgendeinem der vorgehenden Ansprüche, **dadurch gekennzeichnet, daß** die Breite der Längsspalte (3) eine Breite umfaßt, die für den Durchgang eines Bankschecks (8) gebildet ist, wobei der Durchgang einer Bankkarte untersagt wird.

4. Vorrichtung nach irgendeinem der vorgehenden Ansprüche, **dadurch gekennzeichnet, daß** der zweite Teil (2) auf seiner oberen Seite (11) ein flexibles Zünglein (9) umfaßt, das im Hinblick auf den ersten Lesekopf (4) der Länge nach angebracht ist und sich beiderseits desselben erstreckt, um einen Scheck (8) gegen den besagten Lesekopf (4) zu drücken.
